# EUROPÄISCHE PATENTSCHRIFT

(11) **EP 3 221 196 B1**
(45) Veröffentlichungstag und Bekanntmachung des Hinweises auf die Patenterteilung: **12.09.2018**
(21) Anmeldenummer: 16706211.6
(22) Anmeldetag: 25.02.2016
(51) Int. Cl.: B60T 17/00, B60T 17/08, F16D 65/28

(54) **BETÄTIGUNGSVORRICHTUNG FÜR EINE BREMSEINRICHTUNG EINES SCHIENENFAHRZEUGES**
ACTUATING APPARATUS FOR BRAKE DEVICE OF A RAIL VEHICLE
DISPOSITIF D'ACTIVATION POUR UN SYSTÈME DE FREIN D'UN VÉHICULE SUR RAILS

(30) Priorität: 18.03.2015 AT 502172015
(43) Veröffentlichungstag der Anmeldung: 27.09.2017
(73) Patentinhaber: Siemens AG Österreich, 1210 Wien (AT)
(72) Erfinder: ZENZ, Rüdiger, 8020 Graz (AT)
(74) Vertreter: Maier, Daniel Oliver
(86) Internationale Anmeldenummer: PCT/EP2016/053955
(87) Internationale Veröffentlichungsnummer: WO 2016/146359

(56) Entgegenhaltungen:
- GB-A- 2 000 225
- US-A- 3 597 016

## Beschreibung

### Technisches Gebiet

Die Erfindung betrifft eine Betätigungsvorrichtung für eine Bremseinrichtung, vorzugsweise Scheibenbremse, eines Schienenfahrzeuges, umfassend einen Zylinder mit einem darin geführten Kolben zur Betätigung von Bremsaktuatoren, wobei der Kolben durch Änderung des an einer Druckseite des Kolbens anliegenden Bremsdrucks im Zylinder bewegbar ist, wobei sich in Abhängigkeit der Bewegung des Kolbens ein zumindest von Zylinder und Kolben begrenztes Luftvolumen verändert.

### Stand der Technik

Schienenfahrzeuge sind zumeist mit mehreren Bremssystemen ausgestattet, von denen die Reibungsbremse als besonders sicherheitsrelevant einzustufen ist. Eine solche Reibungsbremse wandelt die kinetische Energie und die Differenz der potentiellen Energie über Reibpartner in Wärme um. Dabei werden Bremsaktuatoren, wie Bremszangen oder Klotzbremsen, gegen einen Gegenpart, beispielweise eine Bremsscheibe oder Rad, gepresst und dadurch ein Abbremsen bzw. ein kompletter Stillstand des Schienenfahrzeuges herbeigeführt.

Zur Betätigung eines derartigen Bremssystems ist in der Regel eine Betätigungsvorrichtung in Form eines pneumatischen oder hydraulischen Kolben-Zylindersystems vorgesehen. Eine solche Betätigungsvorrichtung kann entweder aktiv, passiv oder als eine Kombination der beiden Bauarten ausgebildet sein.

Bei einer sogenannten aktiven Betätigungsvorrichtung befindet sich der Kolben in einer Ruhestellung wenn kein Druck an einer Druckseite des Kolbens anliegt und führt eine Beaufschlagung der Druckseite des Kolbens zu einer Bewegung des Kolbens in eine Bremsstellung, bei der die Bremsaktuatoren betätigt sind, also gegen den Gegenpart gepresst werden, und ein Bremsvorgang stattfindet. Solche Betätigungsvorrichtungen sind in der Regel für Betriebsbremsen vorgesehen.

Bei sogenannten passiven Betätigungsvorrichtungen hingegen, wird der Kolben mittels Federspeicher vorgespannt, sodass sich der Kolben ohne Druckbeaufschlagung in der Bremsstellung befindet. Erst durch Beaufschlagung der Druckseite des Kolbens mit Druck wird der Kolben in die Ruhestellung, bei der die Bremsaktuatoren nicht mit dem Gegenpart in Eingriff stehen, bewegt. Eine solche Anordnung ist zumeist für Feststell- und Notbremsen vorgesehen.

Jedenfalls wird durch die Bewegung des Kolbens ein zumindest von Zylindergehäuse und Kolben begrenztes Luftvolumen vergrößert bzw. verkleinert. Wenn an den Zylinder bzw. an das Zylindergehäuse ein Aktuatorgehäuse für Betätigungsmittel der Bremse anschließt, so kommt das Volumen des Aktuatorgehäuses zum Luftvolumen des Zylindergehäuses hinzu. Um die mit der Veränderung des Luftvolumens einhergehenden Druckveränderungen im Luftvolumen des Zylindergehäuses bzw. gegebenenfalls in Zylindergehäuse plus Aktuatorgehäuse auszugleichen, ist daher in der Regel zumindest eine Entlüftungsöffnung vorgesehen, welche das Luftvolumen mit der umgebenden Atmosphäre verbindet und so einen Druckausgleich ermöglicht.

Das Vorsehen einer Entlüftungsöffnung hat sich jedoch als nachteilig herausgestellt, da es durch Umwelteinflüsse, welche auf die Entlüftungsöffnung einwirken, zu einem erhöhten Verschleiß der gesamten Betätigungsvorrichtung kommen kann. Sollte die Betätigungsvorrichtung beispielsweise in wüstenähnlichen oder sehr feuchten Gebieten betrieben werden, so können Feuchtigkeit oder korrosive Sande durch die Entlüftungsöffnung in den Zylinder gelangen und Korrosion im Inneren des Zylinders verursachen.
Bei einer kalten Umgebung, beispielsweise im Winterbetrieb, hingegen, kann es durch die Wärmeentwicklung beim Bremsen und das Abkühlen durch den Fahrtwind zu einer Vereisung der Entlüftungsöffnung kommen, wodurch der Druckausgleich im Zylinder- bzw. Aktuatorgehäuse verhindert wird und sich Über- und Unterdrücke im Luftvolumen ausbilden, welche nur über Betätigungsmittel für die Bremsaktuatoren bzw. deren Lagerstellen abgebaut werden können. Tritt nun im Luftvolumen ein Unterdruck auf, so wird dieser ausgeglichen, indem Luft durch die Lagerstellen der Betätigungsmittel in das Luftvolumen eintritt und so Feuchtigkeit und Schmierfette der Lagerstelle in das Luftvolumen eingesaugt werden. Die Feuchtigkeit führt wiederum zu Korrosion, während die stetige Entnahme von Schmierfetten aus den Lagerstellen zu einem vorzeitigen Versagen des Lagers führt.

Aus der GB2000225 A ist eine Betätigungsvorrichtung für eine Bremseinrichtung bekannt.

### Aufgabe der Erfindung

Es ist daher eine Aufgabe der Erfindung die Nachteile des Stands der Technik zu überwinden und eine Betätigungsvorrichtung für eine Bremsvorrichtung vorzuschlagen, welche unempfindlich gegenüber äußeren Umwelteinflüssen ist, um die Lebenserwartung der Bremsvorrichtung zu erhöhen.

### Darstellung der Erfindung

Diese Aufgabe wird durch eine Betätigungsvorrichtung mit den Merkmalen des Patentanspruchs 1 gelöst. Vorteilhafte Ausgestaltungen der Erfindung sind in den jeweiligen abhängigen Ansprüchen definiert.

Die Erfindung betrifft eine Betätigungsvorrichtung für eine Bremseinrichtung, vorzugsweise Scheibenbremse oder Klotzbremse, eines Schienenfahrzeuges, umfassend einen Zylinder mit einem darin geführten Kolben zur Betätigung von Bremsaktuatoren, wobei der Kolben durch Änderung des an einer Druckseite des Kolbens anliegenden Bremsdrucks im Zylinder bewegbar ist, wobei sich in Abhängigkeit der Bewegung des Kolbens ein zumindest von Zylinder und Kolben begrenztes Luftvolumen (oft ein von Zylinder, Kolben und Aktuatorgehäuse begrenztes Luftvolumen) verändert.

Erfindungsgemäß ist dabei vorgesehen, dass das Luftvolumen gegen die Umgebung abgeschlossen ist, um einen direkten Druckausgleich zwischen Luftvolumen und atmosphärischem Druck zu verhindern und
dass zumindest ein Druckausgleichsmittel mit dem Luftvolumen verbunden ist.

Durch die Ausbildung eines gegen die Umgebung abgeschlossenen bzw. abgedichteten Luftvolumens, welches nicht mehr über eine Entlüftungsöffnung mit der Umgebung verbunden ist, ist die Betätigungsvorrichtung nunmehr unempfindlich gegen umgebungsbedingte Umwelteinflüsse, wie Feuchtigkeit, Wasser oder Sande bzw. Staub, welche durch die Entlüftungsöffnung - gegebenenfalls durch das Aktuatorgehäuse - in den Zylinder eindringen würden. Da sich durch die Bewegung des Kolbens bei einem abgeschlossenen Luftvolumen jedoch unterschiedliche Drücke ausbilden würden, was im Wesentlichen den zuvor als nachteilig beschriebenen Effekten bei zugefrorener oder verstopfter Entlüftungsöffnung entsprechen würde, ist das abgekapselte Luftvolumen mit zumindest einem Druckausgleichsmittel verbunden, um die entstehenden Druckdifferenzen im Luftvolumen auszugleichen.

Derartige Druckausgleichsmittel können dabei beispielsweise als zusätzliche veränderbare oder starre Ausgleichsvolumina ausgebildet sein, welche die auftretenden Druckdifferenzen abschwächen, sodass der Ausgleich nicht an unerwünschten Stellen, beispielsweise an Lagerstellen oder Dichtungen, erfolgt.

Das Luftvolumen umfasst dabei zumindest das von Zylinder und Kolben begrenzte Volumen, welches sich durch die Bewegung des Kolbens verändert, ist jedoch nicht allein auf dieses beschränkt, sondern umfasst auch etwaige mit diesem Volumen verbundene Volumina, wie das genannte Aktuatorgehäuse.

Es versteht sich dabei von selbst, dass eine erfindungsgemäße Ausführung der Betätigungsvorrichtung, sowohl für aktive, passive und kombinierte Bremssysteme denkbar ist, wobei die Art des Kolben-Zylindersystems, also beispielsweise die Ausführung als Kolben-, Manschetten- oder Membranzylinder und entsprechend gestaltetem Kolben, für die Funktion der Erfindung irrelevant ist.

Somit wird erreicht, dass die Lebensdauer des Zylinders erhöht wird, da die Gefahr einer Korrosion im Inneren des Zylinders signifikant verringert ist. Dementsprechend erhöhen sich auch die vorzusehenden Wartungsintervalle, was insgesamt zu einer höheren Verfügbarkeit der Schienenfahrzeuge und damit zu geringeren Stillstands- und Wartungskosten führt.

Eine Ausführungsvariante der Erfindung sieht vor, dass das Luftvolumen durch den Zylinder, die der Druckseite abgewandte Seite des Kolbens sowie die dieser Seite gegenüberliegende Seitenfläche des Zylinders begrenzt ist. Ist der Zylinder gegenüber einem angrenzenden Bauteil an dem der Druckseite gegenüberliegendes Ende abgedichtet, sodass kein Luftaustausch zwischen den Bauteilen stattfindet, so ist zusätzlich zu den zuvor genannten Vorteilen durch das Vorsehen zumindest eines Druckausgleichsmittels, der Arbeitsaufwand und die Wärmeentwicklung bei der Bewegung des Kolbens reduziert.

Ist der Zylinderraum jedoch mit dem angrenzenden Bauteil verbunden, welches Bauteil als Aktuatorgehäuse für Betätigungsmittel ausgebildet ist, so ist in einer weiteren Ausführungsvariante der Erfindung vorgesehen, dass das Luftvolumen durch den Zylinder und die der Druckseite abgewandte Seite des Kolbens und ein mit dem Zylinder verbundenes Aktuatorgehäuse zur Aufnahme von mit dem Kolben verbundenen Betätigungsmitteln für die Bremsaktuatoren begrenzt ist. Solche Betätigungsmittel sind beispielsweise Hebel, Stempel, Stößel oder mechanische, hydro-mechanische bzw. Exzenter-Getriebe oder Federspeicher, welche zur Betätigung der Bremseinrichtung dienen. Das zumindest eine Druckausgleichsmittel kann dabei an jeder beliebigen Stelle des Luftvolumens mit diesem verbunden sein, also in anderen Worten sowohl mit dem Zylinder selbst als mit dem Gehäuse oder gegebenenfalls mit beiden.

Um die, durch die Bewegung des Kolbens und die damit verbundenen Änderung der Größe des Luftvolumens bedingten, Druckunterschiede im Luftvolumen zu verringern, ist in einer weiteren Ausführungsvariante der Erfindung vorgesehen, dass das Druckausgleichsmittel als ein nicht veränderbares Ausgleichsvolumen außerhalb des Luftvolumens ausgebildet ist. Durch die Erhöhung des Gesamtvolumens um das Ausgleichvolumen, werden die, durch die Veränderung des Luftvolumens aufgrund der Bewegung des Kolbens bedingten, Druckspitzen stark abgeschwächt, da das Differenzvolumen zwischen Ruhestellung und Bremsstellung des Kolbens im Verhältnis zum Gesamtvolumen abnimmt. Der Effekt tritt auf, wenn das Ausgleichsvolumen zumindest genauso groß ist wie das Luftvolumen und verstärkt sich, je größer das Ausgleichsvolumen im Verhältnis zum Luftvolumen ist. Als besonders vorteilhaft hat es sich dabei herausgestellt, wenn das Ausgleichsvolumen zwischen 200% und 800%, vorzugsweise 250% bis 500%, des Luftvolumens beträgt. Als Größe des Luftvolumens wird dabei das Volumen bei jener Kolbenstellung verstanden, bei dem das Luftvolumen maximal ist.

Gemäß einer bevorzugten Ausführungsvariante einer erfindungsgemäßen Betätigungsvorrichtung, ist das Druckausgleichsmittel als ein veränderbares Ausgleichsvolumen ausgebildet. Durch die Veränderbarkeit des Ausgleichsvolumens, können die Druckunterschiede auch bei einem im Verhältnis zu einem starren Ausgleichsvolumen relativ kleinen Ausgleichsvolumen ausgeglichen werden, indem sich die Größe des Ausgleichsvolumens den jeweiligen Druckverhältnissen bzw. dem jeweiligen Luftvolumen in Abhängigkeit der Kolbenstellung anpasst. Beispielsweise kann dies durch flexible Elemente, wie Membranen, Elastomerschichten oder bewegliche Elemente, wie Kolben-Zylindersysteme oder andere verschiebbare Elemente, erreicht werden.

Ist das zumindest eine Druckausgleichsmittel als Ausgleichsvolumen ausgebildet, so kann dieses beispielsweise als speicherartiges Behälterelement ausgebildet sein. Denkbar ist dabei jedwede äußere Gestaltung des das Ausgleichsvolumen umschließenden Behälterelementes. Sind zur Verbindung des Ausgleichsvolumens mit dem Luftvolumen Verbindungsleitungen vorgesehen, so ist auch das Volumen der Leitungen dem Ausgleichsvolumen zuzurechnen.

In einer weiteren Ausführungsvariante der Erfindung ist daher vorgesehen, dass sich bei einer Bewegung des Kolbens von einer Ausgangsstellung in eine Endstellung, bei der das Luftvolumen durch die Bewegung des Kolbens im Vergleich zur Ausgangsstellung verkleinert ist, das Ausgleichsvolumen vergrößert, um die Ausbildung eines Überdrucks im Luftvolumen zu verringern. Wie bereits eingangs ausgeführt unterscheiden sich die Größen des Luftvolumens in Ruhestellung und Bremsstellung bei aktiven und passiven Bremssystemen. Während bei aktiven Systemen in der Regel die Bewegung des Kolbens von der Ruhestellung als Ausgangsstellung in die Bremsstellung als Endstellung die Verkleinerung des Luftvolumens zur Folge hat, ist die Ausgangsstellung bei passiven Bremssystemen zumeist die Bremsstellung, welche in die Ruhestellung als Endstellung übergeht. Bei kombinierten Systemen, welche sowohl ein aktives als auch ein passives Bremssystem aufweisen, sind in der Regel zwei voneinander abhängige Kolben-Zylindersysteme vorgesehen, wobei die Bewegung des Kolbens des passiven Systems eine entsprechende Bewegung des Kolbens des aktiven Systems bedingt. Beide Systeme können dabei unabhängig voneinander erfindungsgemäß gestaltet sein.

Eine weitere Ausführungsvariante der Erfindung sieht zur Verringerung eines Unterdruckes vor, dass sich bei einer Bewegung des Kolbens von der Endstellung in die Ausgangsstellung, bei der das Luftvolumen durch die Bewegung des Kolbens im Vergleich zur Endstellung vergrößert ist, das Ausgleichsvolumen verkleinert, um die Ausbildung eines Unterdrucks im Luftvolumen zu verringern. Die Ausgangsstellungen bzw. Endstellungen bei aktiven bzw. passiven Bremssystemen verhalten sich dabei genau umgekehrt zu den vorher beschriebenen, mit anderen Worten ist die Ausgangsstellung für aktive Systeme die Bremsstellung, wohingegen die Ausgangsstellung bei einem passiven System die Ruhestellung ist.

Durch die jeweilige Vergrößerung bzw. Verkleinerung des Ausgleichsvolumens in direkter Abhängigkeit von der Stellung des Kolbens und der damit verbundenen Größe des Luftvolumens, können auch bei kleinem Bauraum, die nachteiligen Effekte der Kolbenbewegung effektiv verhindert werden, um die Lebensdauer der Betätigungsvorrichtung und damit der gesamten Bremseinrichtung zu erhöhen.

Gemäß einer weiteren bevorzugten Ausführungsvariante der Erfindung ist vorgesehen, dass die Differenz zwischen Ausgleichsvolumen in der Endstellung und Ausgleichsvolumen in der Ausgangsstellung der Differenz zwischen Luftvolumen in der Ausgangsstellung und Luftvolumen in der Endstellung entspricht. So wird das Gesamtvolumen, welches sich aus Luft- und Ausgleichsvolumen zusammensetzt, annähernd konstant gehalten, sodass es insgesamt zu keiner Veränderung des Drucks im Gesamtvolumen, bei einer Änderung der Kolbenstellung kommt. Es versteht sich dabei von selbst, dass die Differenz als Absolutbetrag zu verstehen ist.

Eine konstruktiv einfach zu erreichende und verhältnismäßig wartungsarme Ausführung des veränderbaren Ausgleichsvolumens wird in einer besonders bevorzugten Ausführungsvariante einer erfindungsgemäßen Betätigungsvorrichtung dann erreicht, wenn das Ausgleichsvolumen durch eine flexible Membran begrenzt ist. Eine solche Membran kann in an sich bekannter Weise aus reinem Elastomer oder aus einer mit Elastomer ummantelten metallischen Trägerplatte bestehen. Es sind ebenfalls, je nach konstruktiver Ausgestaltung, die verschiedensten Bauformen von Membranen denkbar, diese können entweder ball- bzw. sackförmig oder aber teller-, platten- oder topfförmig ausgebildet sein.

Eine alternative Ausführungsvariante eines veränderbaren Ausgleichsvolumens, welche sich durch exzellente mechanische Eigenschaften und extrem hohe Lebensdauern auszeichnet, sieht vor, dass das Ausgleichsvolumen durch ein Kolben-Zylindersystem, umfassend einen zweiten Kolben und einen zweiten Zylinder, begrenzt ist. Ein solches zweites Kolben-Zylindersystem lässt sich leicht dimensionieren und ist äußerst zuverlässig in der Funktion.

Wenn die Bewegung des zweiten Kolbens in einer weiteren alternativen Ausführungsvariante der Erfindung mechanisch mit der Bewegung des Kolbens gekoppelt ist, so werden auch eventuell auftretende Druckunterschiede, aufgrund der Kolbenreibung oder ähnlichen Effekten, die die Bewegung des zweiten Kolbens verzögern würden, vermieden. Die Koppelung kann beispielsweise über eine indirekte Koppelung der Kolbenstangen der Kolben erreicht werden, sodass sich der Kolben und der zweite Kolben in entgegengesetzter Richtung in den jeweiligen Zylindern bewegen.

In weiteren bevorzugten Ausführungsvarianten der Erfindung ist ein weiteres Volumen auf der dem Ausgleichsvolumen gegenüberliegenden Seite der flexiblen Membran bzw. des zweiten Kolbens ausgebildet bzw. begrenzt. Bei der flexiblen Membran kann es sich dabei beispielsweise um den Hohlraum eines die flexible Membran umgebenden und begrenzenden Behälterelementes handeln, wobei bei einem zweiten Kolben-Zylindersystem das weitere Volumen in der Regel vom zweiten Zylinder selbst ausgebildet ist.

Wenn das weitere Volumen gegen die Umgebung abgeschlossen ist, so fungieren das Gesamtvolumen, bestehend aus Luft- und Ausgleichsvolumen, und das weitere Volumen in an sich bekannter Weise als Druckspeicher, sodass ein in sich geschlossenes, gegen die Umgebung abgedichtetes Luftsystem entsteht. Bei einer flexiblen Membran handelt es sich bei dem Druckspeicher entweder um einen Blasenspeicher oder einen Membranspeicher, wobei in der alternativen Ausführungsvariante ein Kolbenspeicher ausgebildet ist.

Wenn das weitere Volumen hingegen derart ausgebildet ist, dass ein Druckausgleich mit der Umgebung stattfindet, beispielsweise in dem das weitere Volumen über eine oder mehrere Öffnungen gegen die Umgebung geöffnet, so wird bei einer Bewegung des Kolbens und einer entsprechenden Änderung des Ausgleichsvolumens keine Arbeit im System gespeichert, wodurch die Wärmeentwicklung deutlich reduziert wird. Trotzdem sind die zur Betätigung der Bremsaktuatoren notwendigen Komponenten von der Umgebung abgekapselt, da der Druckausgleich erst über das weitere Volumen erfolgt.

### Kurzbeschreibung der Figuren

Zur weiteren Erläuterung der Erfindung wird im nachfolgenden Teil der Beschreibung auf die Figuren Bezug genommen, aus der weitere vorteilhafte Ausgestaltungen, Einzelheiten und Weiterbildungen der Erfindung zu entnehmen sind. Die Figuren sind als beispielhaft zu verstehen und sollen den Erfindungscharakter zwar darlegen, ihn aber keinesfalls einengen oder gar abschließend wiedergeben. Es zeigen:
- Fig. 1: eine Darstellung einer Bremseinrichtung gemäß dem Stand der Technik;
- Fig. 2: eine schematische Darstellung einer Betätigungsvorrichtung gemäß einer bevorzugten Ausführungsvariante der Erfindung;
- Fig. 3: eine schematische Darstellung einer Betätigungsvorrichtung gemäß einer weiteren bevorzugten Ausführungsvariante der Erfindung.

### Ausführung der Erfindung

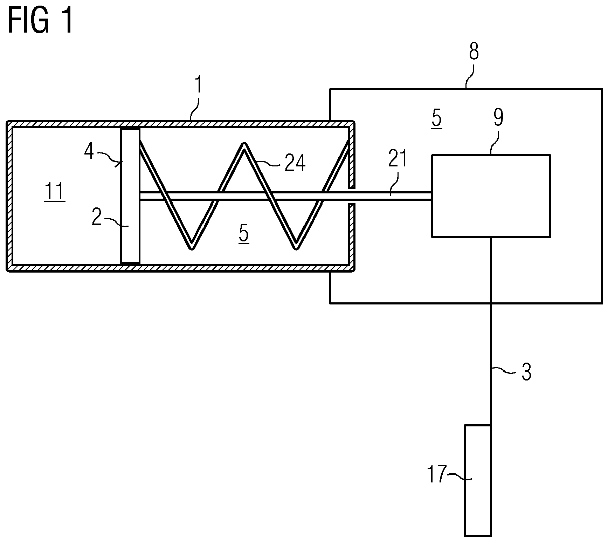

Figur 1 zeigt eine Bremseinrichtung gemäß dem Stand der Technik. Die gezeigte Bremseinrichtung weist einen Bremsaktuator 3 auf, welcher als Bremszange ausgebildet und mit einem Bremsbelag 17 versehen ist. Der Bremsaktuator 3 ist auf einer Seite eines nicht gezeigten Gegenparts, etwa einer Bremsscheibe, angeordnet, sodass sich bei einer Bremsung der Bremsbelag 17 in Eingriff mit dem Gegenpart befindet. Die Bremseinrichtung kann aber genauso zwei als Bremszangen ausgebildete Bremsaktuatoren 3 aufweisen. Die beiden Bremsaktuatoren 3 sind dann auf beiden Seiten des nicht gezeigten Gegenparts, etwa einer Bremsscheibe, angeordnet, sodass sich bei einer Bremsung die Bremsbeläge 17 im Eingriff mit dem Gegenpart befinden. Zur Betätigung des bzw. der Bremsaktuatoren 3 weist die Bremseinrichtung ein aktives Bremssystem auf, in diesem Fall die Betriebsbremse.

Die Betätigungsvorrichtung für das aktive Bremssystem umfasst dabei einen Zylinder 1 und einen darin geführten Kolben 2, welche im vorliegenden Fall als Manschettenzylinder ausgeführt sind. Ebenso denkbar ist auch die Verwendung eines Membranzylinders oder eines Kolbenzylinders. Der Kolben 2 teilt den Zylinder 1 in eine Druckkammer 11, welche über ein pneumatisches System mit Druck beaufschlagt werden kann, und eine der Druckkammer 11 gegenüberliegende Kammer. Der Kolben 2 weist auf der der Druckkammer 11 zugewandten Seite eine Druckseite 4 auf und ist über die Kolbenstange 21, welche in das Aktuatorgehäuse 8 ragt, und Betätigungsmittel 9 mit einem Bremsaktuator 3 verbunden. Die Betätigungsmittel 9 sind zumindest teilweise in einem Aktuatorgehäuse 8 untergebracht, welches an die der Druckkammer 11 gegenüberliegenden Kammer anschließt und mit dieser Kammer verbunden ist. Die Betätigungsmittel 9 umfassen z.B. Hebel, Stempel, Stößel oder mechanische, hydro-mechanische bzw. Exzenter-Getriebe oder Federspeicher.

Wird der Kolben 2 durch Beaufschlagung der Druckkammer 11 mit Druck in eine Bremsstellung gebracht, so wird durch die Bewegung des Kolbens 2 bzw. der Kolbenstange 21 der Bremsbelag 17 in Eingriff mit dem Gegenpart kommen. Wird der Druck in der Druckkammer 11 reduziert, so sorgt eine zwischen Aktuatorgehäuse 8 und Kolben 2 angeordnete Rückstellfeder 24 für die Bewegung des Kolbens 2 in die Ruhestellung, wodurch die Bremse gelöst wird.

Der Teil des Zylinders 1, welcher der Druckseite 4 des Kolbens 2 gegenüber liegt, sowie der durch das Aktuatorgehäuse 8 begrenzte Raum bilden gemeinsam ein Luftvolumen 5 aus, welches bei der Bewegung des Kolbens 2 von der Ruhestellung in die Bremsstellung komprimiert also verkleinert wird bzw. bei der Bewegung von der Bremsstellung in die Ruhestellung expandiert also vergrößert wird. Um die Änderung des Luftvolumens 5 zu kompensieren ist eine, nicht dargestellte, Entlüftungsöffnung vorgesehen, über welche das Luftvolumen 5 in direktem Kontakt mit dem umgebenden atmosphärischem Druck steht, sodass ein Luftaustausch stattfinden kann.

Ist die Entlüftungsöffnung jedoch, beispielsweise durch Vereisung im Winterbetrieb, verschlossen bzw. verstopft, so findet kein Luftaustausch zwischen Luftvolumen 5 und Umgebung statt, sodass sich bei der Bewegung in die Bremsstellung ein Überdruck und bei der Bewegung in die Ruhestellung ein Unterdruck im Luftvolumen 5 ausbildet, wobei die Druckunterschiede lediglich an unvorhergesehenen Stellen abgebaut werden können. Es wurde festgestellt, dass diese hauptsächlich über die Lager der Betätigungsmittel 9 abgebaut werden, sodass einerseits Schmierfette aus dem Lager ausgebracht werden und andererseits Feuchtigkeit über die Lagerstellen in das Luftvolumen 5 eingesaugt wird, was einerseits zum vorzeitigen Versagen der Lager und andererseits zu einer Korrosion der Innenflächen des Zylinders 1 bzw. des Aktuatorgehäuses 8 sowie der Betätigungsmittel 9 führt.

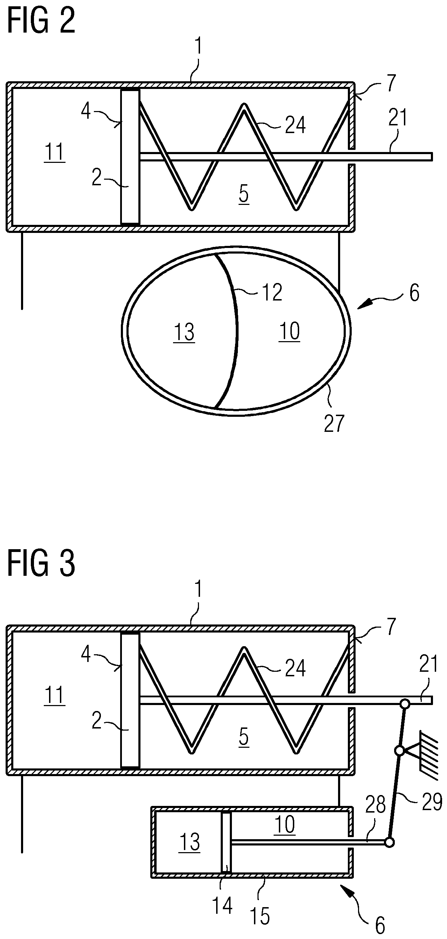

In weiterer Folge sind bevorzugte Ausführungsvarianten der Erfindung schematisch in den Figuren 2 und 3 dargestellt, wobei jeweils nur Kolben 2 und Zylinder 1 mit dem eingeschlossenen Luftvolumen 5 der Betätigungsvorrichtung dargestellt sind. Obwohl es sich bei der dargestellten Ausführungsvariante um ein aktives Bremssystem handelt, versteht es sich von selbst, dass die Ausführungen genauso auch für passive Bremssysteme gelten.

Figur 2 zeigt eine bevorzugte Ausführungsvariante der Erfindung, bei der das Luftvolumen 5 gegenüber der Umgebung abgeschlossen ist, um einen direkten Druckausgleich zwischen Luftvolumen 5 und atmosphärischem Druck zu verhindern, indem keine Entlüftungsöffnung vorgesehen ist. Des Weiteren ist der Zylinder 1 auf der der Druckkammer 11 gegenüberliegenden Seite gegen die Umgebung abgedichtet und ist damit begrenzt. Analog zu dem in Figur 1 gezeigten Beispiel, ist es natürlich genauso denkbar, dass das Luftvolumen 5 auch das Aktuatorgehäuse 8 zur Aufnahme von den mit dem Kolben 2 bzw. der Kolbenstange 21 verbundenen Betätigungsmitteln 9 umfasst.

Zum Ausgleich der durch die Bewegung des Kolbens 2 bedingten Druckänderungen im Luftvolumen 5, ist das Luftvolumen 5 mit einem Druckausgleichsmittel 6 verbunden, welches als ein veränderbares, durch eine flexible Membran 12 begrenztes, Ausgleichsvolumen 10 ausgebildet ist. Auf der dem Ausgleichsvolumen 10 gegenüberliegenden Seite der flexiblen Membran 12 ist ein weiteres Volumen 13 angeordnet, wobei beide Volumina 10,13 gegen die Umgebung durch ein Behälterelement 27 abgetrennt sind und durch die flexible Membran 12 auch komplett gegeneinander abgedichtet sind. Somit entsteht ein System das in seiner Wirkung im Wesentlichen einem Druckspeicher, genauer einem Membranspeicher, entspricht.

Bewegt sich der Kolben 2 nun von der Ruhestellung (Ausgangsstellung) in die Bremsstellung (Endstellung), wodurch das Luftvolumen 5 komprimiert bzw. verkleinert ist, so vergrößert sich das Ausgleichsvolumen 10 durch Ausdehnung der flexiblen Membran 12 in Richtung des weiteren Volumens 13. Damit wird die Ausbildung eines Überdrucks im Luftvolumen 5 verringert.

Gleichermaßen wird die flexible Membran 12 bei der Bewegung des Kolbens 2 von der Bremsstellung (Endstellung) in die Ruhestellung (Ausgangsstellung), welche mit einer Expansion bzw. Vergrößerung des Luftvolumens 5 einhergeht, entspannt, sodass sich das Ausgleichsvolumen 10 verkleinert und die Ausbildung eines Unterdruckes im Luftvolumen 5 verringert wird.

Besonders bevorzugt sind die Volumina 10,13 und die flexible Membran 12 so dimensioniert, dass die Differenz zwischen Luftvolumen 5 in der Ruhestellung und in der Bremsstellung der Differenz zwischen Ausgleichsvolumen 10 in der Bremsstellung und der Ruhestellung entspricht. In anderen Worten bleibt dadurch ein Gesamtvolumen, zusammengesetzt aus Luftvolumen 5 und Ausgleichsvolumen 10, unabhängig von der Stellung des Kolbens 2, konstant.

Figur 3 zeigt eine weitere bevorzugte Ausführungsvariante der Erfindung, welches im Wesentlichen der unter Figur 2 beschriebenen Ausführungsvariante gleicht. Im Unterschied zu der zuvor beschriebenen Ausführung, ist das Druckausgleichsmittel 6 hier als ein, durch ein Kolben-Zylindersystem gebildetes und veränderbares, Ausgleichsvolumen 10 ausgebildet. Das Kolben-Zylindersystem umfasst dabei einen zweiten Zylinder 15 und einen darin geführten zweiten Kolben 14 mit einer zweiten Kolbenstange 28. Der zweite Kolben 14 teilt dabei den zweiten Zylinder 15 in das, mit dem Luftvolumen 5 verbundene, Ausgleichsvolumen 10 und das weitere Volumen 13. Demnach bilden die Volumina 5,10,13 einen Druckspeicher, genauer einen Kolbenspeicher, aus.

Die Kolbenstange 21 des Kolbens 2 ist dabei über einen Hebelarm 29 so mit der zweiten Kolbenstange 28 des zweiten Kolbens 14 verbunden, dass sich bei einer Bewegung des Kolbens 2 der zweite Kolben 14 in die entgegengesetzte Richtung bewegt. So wird der oben beschriebene Effekt durch die Bewegung des zweiten Kolbens 14 im zweiten Zylinder 15 erreicht, sodass sich das Ausgleichsvolumen 10 bei einer Expansion bzw. Vergrößerung des Luftvolumens 5, durch Bewegung des zweiten Kolbens 14 in die dem weiteren Volumen 13 entgegengesetzte Richtung, verkleinert bzw. sodass sich bei einer Verkleinerung bzw. Kompression des Luftvolumens 5 das Ausgleichsvolumen 10, durch die Bewegung des zweiten Kolbens 14 in Richtung des weiteren Volumens 13, vergrößert. Dadurch bleibt das Gesamtvolumen, zusammengesetzt aus Luftvolumen 5 und Ausgleichsvolumen 10, vorzugsweise konstant.

In alternativen Ausführungsvarianten der unter Figur 2 und 3 beschriebenen Systeme kann auch vorgesehen sein, dass jeweils das weitere Volumen 13 mit der Umgebung verbunden ist, um im weiteren Volumen 13 einen Druckausgleich zu ermöglichen, ohne dabei das abgekapselte Luftsystem des Gesamtvolumens zu durchbrechen.

In weiteren alternativen Ausführungsvarianten kann anstatt des veränderbaren Ausgleichsvolumens 10 ein nicht veränderbares Ausgleichsvolumen 10 als Druckausgleichsmittel 6 vorgesehen sein. Ein solches Ausgleichsvolumen 10 kann beispielsweise als das in Figur 2 dargestellte Behälterelement 27, jedoch ohne flexible Membran 12 ausgebildet sein. Durch das zusätzliche Ausgleichsvolumen 10, welches das Gesamtvolumen erhöht und bevorzugt zwischen 200% und 800%, besonders bevorzugt zwischen 250% und 500%, des Luftvolumens 5 beträgt, werden die aus den Bewegungen des Kolbens 2 resultierenden Druckunterschiede, auf ein größeres Gesamtvolumen verteilt, sodass die negativen Effekte entscheidend abgemildert werden.

### Bezugszeichenliste:

- 1: Zylinder
- 2: Kolben
- 3: Bremsaktuator
- 4: Druckseite des Kolbens 2
- 5: Luftvolumen
- 6: Druckausgleichsmittel
- 7: Seitenfläche des Zylinders 1
- 8: Aktuatorgehäuse
- 9: Betätigungsmittel
- 10: Ausgleichsvolumen
- 11: Druckkammer
- 12: flexible Membran
- 13: weiteres Volumen
- 14: zweiter Kolben
- 15: zweiter Zylinder
- 16: Federspeicher
- 17: Bremsbelag
- 18: -
- 19: -
- 20: -
- 21: Kolbenstange
- 22: -
- 23: -
- 24: Rückstellfeder
- 25: -
- 26: -
- 27: Behälterelement
- 28: zweite Kolbenstange
- 29: Hebelarm

## Patentansprüche

1. Betätigungsvorrichtung für eine Bremseinrichtung, vorzugsweise Scheibenbremse oder Klotzbremse, eines Schienenfahrzeuges, umfassend einen Zylinder (1) mit einem darin geführten Kolben (2) zur Betätigung von Bremsaktuatoren (3), wobei der Kolben (2) durch Änderung des an einer Druckseite (4) des Kolbens (2) anliegenden Bremsdrucks im Zylinder (1) bewegbar ist, wobei sich in Abhängigkeit der Bewegung des Kolbens (2) ein zumindest von Zylinder (1) und Kolben (2) begrenztes Luftvolumen (5) verändert, wobei das Luftvolumen (5) gegen die Umgebung abgeschlossen ist, um einen direkten Druckausgleich zwischen Luftvolumen (5) und atmosphärischem Druck zu verhindern und **dadurch gekennzeichnet, dass** zumindest ein Druckausgleichsmittel (6) mit dem Luftvolumen (5) verbunden ist.

2. Betätigungsvorrichtung nach Anspruch 1, **dadurch gekennzeichnet, dass** das Luftvolumen (5) durch den Zylinder (1), die der Druckseite (4) abgewandte Seite des Kolbens (2) sowie die dieser Seite gegenüberliegende Seitenfläche (7) des Zylinders (1) begrenzt ist.

3. Betätigungsvorrichtung nach Anspruch 1, **dadurch gekennzeichnet, dass** das Luftvolumen (5) durch den Zylinder (1) und die der Druckseite (4) abgewandte Seite des Kolbens (2) und ein mit dem Zylinder (1) verbundenes Aktuatorgehäuse (8) zur Aufnahme von mit dem Kolben (2) verbundenen Betätigungsmitteln (9) für die Bremsaktuatoren (3) begrenzt ist.

4. Betätigungsvorrichtung nach einem der Ansprüche 1 bis 3, **dadurch gekennzeichnet, dass** das Druckausgleichsmittel (6) als ein nicht veränderbares Ausgleichsvolumen (10) außerhalb des Luftvolumens (5) ausgebildet ist.

5. Betätigungsvorrichtung nach Anspruch 4, **dadurch gekennzeichnet, dass** das Ausgleichsvolumen (10) zwischen 200% und 800%, vorzugsweise 250% bis 500%, des Luftvolumens (5) beträgt.

6. Betätigungsvorrichtung nach einem der Ansprüche 1 bis 3, **dadurch gekennzeichnet, dass** das Druckausgleichsmittel (6) als ein veränderbares Ausgleichsvolumen (10) ausgebildet ist.

7. Betätigungsvorrichtung nach Anspruch 6, **dadurch gekennzeichnet, dass** sich bei einer Bewegung des Kolbens (2) von einer Ausgangsstellung in eine Endstellung, bei der das Luftvolumen (5) durch die Bewegung des Kolbens (2) im Vergleich zur Ausgangsstellung verkleinert ist, das Ausgleichsvolumen (10) vergrößert, um die Ausbildung eines Überdrucks im Luftvolumen (5) zu verringern.

8. Betätigungsvorrichtung nach Anspruch 6 oder 7, **dadurch gekennzeichnet, dass** sich bei einer Bewegung des Kolbens (2) von der Endstellung in die Ausgangsstellung, bei der das Luftvolumen (5) durch die Bewegung des Kolbens (2) im Vergleich zur Endstellung vergrößert ist, das Ausgleichsvolumen (10) verkleinert, um die Ausbildung eines Unterdrucks im Luftvolumen (5) zu verringern.

9. Betätigungsvorrichtung nach Anspruch 7 oder 8, **dadurch gekennzeichnet, dass** die Differenz zwischen Ausgleichsvolumen (10) in der Endstellung und Ausgleichsvolumen (10) in der Ausgangsstellung der Differenz zwischen Luftvolumen (5) in der Ausgangsstellung und Luftvolumen (5) in der Endstellung entspricht.

10. Betätigungsvorrichtung nach einem der Ansprüche 6 bis 9, **dadurch gekennzeichnet, dass** das Ausgleichsvolumen (10) durch eine flexible Membran (12) begrenzt ist.

11. Betätigungsvorrichtung nach Anspruch 10, **dadurch gekennzeichnet, dass** die flexible Membran (12) auf der dem Ausgleichsvolumen (10) gegenüberliegenden Seite durch ein weiteres Volumen (13) begrenzt ist, welches gegen die Umgebung abgeschlossen ist, sodass die Volumina (5,10,13) als Druckspeicher fungieren.

12. Betätigungsvorrichtung nach Anspruch 10, **dadurch gekennzeichnet, dass** die flexible Membran (12) auf der dem Ausgleichsvolumen (10) gegenüberliegenden Seite durch ein weiteres Volumen (13) begrenzt ist, welches derart ausgebildet ist, dass ein Druckausgleich mit der Atmosphäre stattfindet.

13. Betätigungsvorrichtung nach einem der Ansprüche 6 bis 9, **dadurch gekennzeichnet, dass** das Ausgleichsvolumen (10) durch ein Kolben-Zylindersystem, umfassend einen zweiten Kolben (14) und einen zweiten Zylinder (15), begrenzt ist.

14. Betätigungsvorrichtung nach Anspruch 13, **dadurch gekennzeichnet, dass** die Bewegung des zweiten Kolbens (14) mechanisch mit der Bewegung des ersten Kolbens (2) gekoppelt ist.

15. Betätigungsvorrichtung nach Anspruch 13 oder 14, **dadurch gekennzeichnet, dass** das weitere Volumen (13) auf der dem Ausgleichsvolumen (10) gegenüberliegenden Seite des zweiten Kolbens (14) ausgebildet ist und dass das weitere Volumen (13) gegenüber der Umgebung abgeschlossen ist, sodass die Volumina (5,10,13) als Druckspeicher fungieren.

16. Betätigungsvorrichtung nach Anspruch 13 oder 14, **dadurch gekennzeichnet, dass** das weitere Volumen (13) auf der dem Ausgleichsvolumen (10) gegenüberliegenden Seite des zweiten Kolbens (14) angeordnet und derart ausgebildet ist, dass ein Druckausgleich mit der Atmosphäre stattfindet.

## Claims

1. Actuating apparatus for a brake device, preferably disc brake or block brake, of a rail vehicle, comprising a cylinder (1) with a piston (2) guided therein for actuating brake actuators (3), wherein the piston (2) can be moved by changing the brake pressure applied on a pressure side (4) of the piston (2) in the cylinder (1), wherein as a function of the movement of the piston (2) an air volume (5) restricted at least by the cylinder (1) and piston (2) is changed, wherein the air volume (5) is shut off from the environment in order to prevent a direct pressure equalisation between air volume (5) and atmospheric pressure, and **characterised in that** at least one pressure equalisation means (6) is connected to the air volume (5).

2. Actuating apparatus according to claim 1, **characterised in that** the air volume (5) is restricted by the cylinder (1), the side of the piston (2) facing away from the pressure side (4) and the lateral surface (7) of the cylinder (1) facing this side.

3. Actuating apparatus according to claim 1, **characterised in that** the air volume (5) is restricted by the cylinder (1) and the side of the piston (2) facing away from the pressure side (4) and an actuator housing (8), connected to the cylinder (1), for receiving actuating means (9), connected to the piston (2), for the brake actuators (3).

4. Actuating apparatus according to one of claims 1 to 3, **characterised in that** the pressure equalisation means (6) is embodied as an unchangeable equalisation volume (10) outside of the air volume (5).

5. Actuating apparatus according to claim 4, **characterised in that** the equalisation volume (10) amounts to between 200% and 800%, preferably 250% to 500%, of the air volume (5).

6. Actuating apparatus according to one of claims 1 to 3, **characterised in that** the pressure equalisation means (6) is embodied as a changeable equalisation volume (10).

7. Actuating apparatus according to claim 6, **characterised in that** when the piston (2) is moved from an initial position into an end position, in which compared with the initial position the air volume (5) is minimised by the movement of the piston (2), the equalisation volume (10) is enlarged in order to reduce the formation of an overpressure in the air volume (5).

8. Actuating apparatus according to claim 6 or 7, **characterised in that** when the piston (2) is moved from the end position into the initial position, in which compared with the end position the air volume (5) is increased by the movement of the piston (2), the equalisation volume (10) is minimised in order to reduce the formation of a depression in the air volume (5).

9. Actuating apparatus according to claim 7 to 8, **characterised in that** the difference between equalisation volume (10) in the end position and equalisation volume (10) in the initial position corresponds to the difference between air volume (5) in the initial position and air volume (5) in the end position.

10. Actuating apparatus according to one of claims 6 to 9, **characterised in that** the equalisation volume (10) is restricted by a flexible membrane (12).

11. Actuating apparatus according to claim 10, **characterised in that** on the side facing the equalisation volume (10) the flexible membrane (12) is restricted by a further volume (13), which is shut off from the environment, so that the volumes (5, 10, 13) function as a pressure reservoir.

12. Actuating apparatus according to claim 10, **characterised in that** on the side facing the equalisation volume (10) the flexible membrane (12) is restricted by a further volume (13), which is embodied such that a pressure equalisation takes place with the atmosphere.

13. Actuating apparatus according to one of claims 6 to 9, **characterised in that** the equalisation volume (10) is restricted by a piston cylinder system comprising a second piston (14) and a second cylinder (15).

14. Actuating apparatus according to claim 13, **characterised in that** the movement of the second piston (14) is coupled mechanically with the movement of the first piston (2).

15. Actuating apparatus according to claim 13 or 14, **characterised in that** the further volume (13) is embodied on the side of the second piston (14) facing the equalisation volume (10) and that the further volume (13) is shut off from the environment so that the volumes (5, 10, 13) function as a pressure reservoir.

16. Actuating apparatus according to claim 13 or 14, **characterised in that** the further volume (13) is arranged on the side of the second piston (14) facing the equalisation volume (10) and is embodied such that a pressure equalisation takes place with the atmosphere.

## Revendications

1. Dispositif d'actionnement pour un dispositif de freinage, de préférence un frein à disque ou un frein à sabot, d'un véhicule sur rails, comportant un cylindre (1) avec un piston (2) guidé dans ce dernier pour l'actionnement d'actionneurs de frein (3), dans lequel le piston (2) est mobile dans le cylindre (1) par modification de la pression de freinage appliquée sur un côté pression (4) du piston (2), dans lequel un volume d'air (5) délimité au moins par le cylindre (1) et le piston (2) se modifie en fonction du déplacement du piston (2), dans lequel le volume d'air (5) est isolé de l'environnement afin d'empêcher une compensation directe de pression entre le volume d'air (5) et la pression atmosphérique et **caractérisé en ce qu'**au moins un moyen de compensation de pression (6) est relié au volume d'air (5).

2. Dispositif d'actionnement selon la revendication 1, **caractérisé en ce que** le volume d'air (5) est délimité par le cylindre (1), le côté opposé au côté pression (4) du piston (2) ainsi que la surface latérale (7) en vis-à-vis de ce côté du cylindre (1).

3. Dispositif d'actionnement selon la revendication 1, **caractérisé en ce que** le volume d'air (5) est délimité par le cylindre (1) et le côté opposé au côté pression (4) du piston (2) et un logement d'actionneur (8) relié au cylindre (1) pour la réception de moyens d'actionnement (9) reliés au piston (2) pour les actionneurs de frein (3).

4. Dispositif d'actionnement selon l'une des revendications 1 à 3, **caractérisé en ce que** le moyen de compensation de pression (6) est conçu sous la forme d'un volume de compensation (10) non modifiable à l'extérieur du volume d'air (5).

5. Dispositif d'actionnement selon la revendication 4, **caractérisé en ce que** le volume de compensation (10) s'élève à une valeur comprise entre 200 % et 800 %, allant de préférence de 250 % à 500 %, du volume d'air (5).

6. Dispositif d'actionnement selon l'une des revendications 1 à 3, **caractérisé en ce que** le moyen de compensation (6) est conçu sous la forme d'un volume de compensation (10) modifiable.

7. Dispositif d'actionnement selon la revendication 6, **caractérisé en ce que** le volume de compensation (10) s'accroît lors d'un déplacement du piston (2) d'une position de départ dans une position finale dans laquelle le volume d'air (5) est réduit par le déplacement du piston (2) en comparaison avec la position de départ afin de minimiser la constitution d'une surpression dans le volume d'air (5).

8. Dispositif d'actionnement selon la revendication 6 ou la revendication 7, **caractérisé en ce que** le volume de compensation (10) se réduit lors d'un déplacement du piston (2) de la position finale dans la position de départ dans laquelle le volume d'air (5) est accru par le déplacement du piston (2) en comparaison avec la position finale afin de minimiser la constitution d'une dépression dans le volume d'air (5).

9. Dispositif d'actionnement selon la revendication 7 ou la revendication 8, **caractérisé en ce que** la différence entre le volume de compensation (10) dans la position finale et le volume de compensation (10) dans la position de départ correspond à la différence entre le volume d'air (5) dans la position de départ et le volume d'air (5) dans la position finale.

10. Dispositif d'actionnement selon l'une des revendications 6 à 9, **caractérisé en ce que** le volume de compensation (10) est délimité par une membrane souple (12).

11. Dispositif d'actionnement selon la revendication 10, **caractérisé en ce que** la membrane souple (12) est délimitée sur le côté en vis-à-vis du volume de compensation (10) par un volume supplémentaire (13), lequel est isolé de l'environnement de telle sorte que les volumes (5, 10, 13) fonctionnent en tant que réservoir de pression.

12. Dispositif d'actionnement selon la revendication 10, **caractérisé en ce que** la membrane souple (12) est délimitée sur le côté en vis-à-vis du volume de compensation (10) par un volume supplémentaire (13), lequel est conçu de telle sorte qu'une compensation de pression ait lieu avec l'atmosphère.

13. Dispositif d'actionnement selon l'une des revendications 6 à 9, **caractérisé en ce que** le volume de compensation (10) est délimité par un système à piston et cylindre, comportant un deuxième piston (14) et un deuxième cylindre (15).

14. Dispositif d'actionnement selon la revendication 13, **caractérisé en ce que** le déplacement du deuxième piston (14) est accouplé mécaniquement au déplacement du premier piston (2).

15. Dispositif d'actionnement selon la revendication 13 ou la revendication 14, **caractérisé en ce que** le volume supplémentaire (13) est constitué sur le côté en vis-à-vis du volume de compensation (10) du deuxième piston (14) et **en ce que** le volume supplémentaire (13) est isolé de l'environnement de telle sorte que les volumes (5, 10, 13) fonctionnent en tant que réservoir de pression.

16. Dispositif d'actionnement selon la revendication 13 ou la revendication 14, **caractérisé en ce que** le volume supplémentaire (13) est disposé sur le côté en vis-à-vis du volume de compensation (10) du deuxième piston (14) et conçu de telle sorte qu'une compensation de pression ait lieu avec l'atmosphère.
